# EUROPÄISCHE PATENTSCHRIFT

(11) **EP 2 057 384 B1**
(45) Veröffentlichungstag und Bekanntmachung des Hinweises auf die Patenterteilung: **14.07.2010**
(21) Anmeldenummer: 07801792.8
(22) Anmeldetag: 21.08.2007
(51) Int. Cl.: F16D 55/225

(54) **SCHEIBENBREMSE, INSBESONDERE FÜR EIN NUTZFAHRZEUG**
DISC BRAKE, IN PARTICULAR FOR A COMMERCIAL VEHICLE
FREIN À DISQUE, NOTAMMENT POUR UN VÉHICULE UTILITAIRE

(30) Priorität: 22.08.2006 DE 102006039298
(43) Veröffentlichungstag der Anmeldung: 13.05.2009
(73) Patentinhaber: KNORR-BREMSE Systeme für Nutzfahrzeuge GmbH, 80809 München (DE)
(72) Erfinder: RAFFIN, Christian, 85630 Grasbrunn (DE); FISCHER, Kai, 93349 Mindelstetten (DE)
(74) Vertreter: Mattusch, Gundula
(86) Internationale Anmeldenummer: PCT/EP2007/007359
(87) Internationale Veröffentlichungsnummer: WO 2008/022770

(56) Entgegenhaltungen:
- EP-A- 0 703 378
- EP-A- 1 069 334
- EP-A- 1 767 805
- DE-B3- 10 302 332
- DE-U1- 8 615 015

## Beschreibung

Die Erfindung betrifft eine Scheibenbremse, insbesondere für ein Nutzfahrzeug entsprechend dem Oberbegriff des Anspruchs 1, sowie einen Haltebügel zur Halterung von Bremsbelägen der Scheibenbremse nach dem Oberbegriff des Anspruchs 11.

Eine solche Scheibenbremse ist beispielsweise aus der DE 86 15 015 U1 bekannt. Dabei dient der Haltebügel dieser Scheibenbremse im wesentlichen als Widerlager für Haltefedern, in diesem Fall Blattfedern, die die Bremsbacken federn verspannen und so neben einer radialen Sicherung die Entstehung von Klappergeräuschen weitgehend verhindern.

Für eine schnelle Montage bzw. Demontage der Bremsbeläge ist der Haltebügel lösbar am Bremssattel befestigt, so dass ein Bremsbelagwechsel problemlos möglich ist.

Um den Haltebügel mit einfachen Mitteln an- und abzubauen, ist er einerseits in eine taschenförmige Aufnahme des Bremssattels eingesteckt und andererseits mit dem Bremssattel, unter Überbrückung einer Montageöffnung für die Bremsbeläge, durch Verschrauben fest verbunden.

Die taschenförmige Aufnahme ist in diesem Fall auf der die Bremsenaußenseite bildenden Seite des Bremssattels vorgesehen, die einer im Bremssattel angeordneten Zuspanneinrichtung gegenüberliegt, die die Bremseninnenseite, also die der Fahrzeugmitte zugewandte Seite bildet. Dabei kann die taschenförmige Aufnahme durch eine mechanische Bearbeitung hergestellt sein oder bei der Fertigung des Bremssattels durch Gießen gleich mit angeformt werden.

Wie erwähnt, ist der Haltebügel auf der anderen Seite mit dem Bremssattel verschraubt, was allerdings eine entsprechend aufwändige Bearbeitung erfordert, beispielsweise das Bohren einer Kernbohrung und ein anschließendes Gewindeschneiden.

Diese Arbeitsgänge stehen einer optimierten Fertigung entgegen, so dass das Produkt insgesamt nur mit einem entsprechend hohen Aufwand herstellbar ist.

Dies gilt gleichermaßen für eine Scheibenbremse, bei der die taschenförmige Aufnahme auf der die Bremseninnenseite bildenden Seite des Bremssattels vorgesehen ist. Die Festlegung des Haltebügels auf der gegenüberliegenden, also sozusagen der Bremsenaußenseite erfolgt mittels eines Bolzens, einer Scheibe und eines Splintes, wobei der Bolzen formschlüssig mit dem Bremssattel verbunden ist. Dieser Formschluss wird oberhalb des Haltebügels hergestellt, der in Verbindung mit der Scheibe durch den Splint niedergedrückt und am Bolzen befestigt ist.

Allerdings benötigt die Verbindung Bolzen/Scheibe und Splint einen entsprechenden Bauraum, der aufgrund der herrschenden engen Platzverhältnisse nur mit erheblichem Aufwand herstellbar ist.

Die Bearbeitung einer bremssattelseitigen Bohrung zur Aufnahme des Bolzens muss überdies abweichend von der Hauptbearbeitungsrichtung erfolgen, wodurch die Fertigung insgesamt erschwert wird. Auch das erwähnte Einbringen der Kernbohrung und das Schneiden des Gewindes zur Herstellung der Schraubverbindung, kann nur abweichend von der Hauptbearbeitungsrichtung erfolgen, so dass sich hierbei die gleichen Nachteile ergeben.

Darüber hinaus besteht prinzipiell bei den bekannten Scheibenbremsen die Gefahr, dass sich das Befestigungselement löst und insbesondere im Fahrbetrieb verloren geht, so dass der Haltebügel seiner Funktion nicht mehr nachkommen kann, mit der Folge eines Versagens der Scheibenbremse.

Aus der EP 1 069 334 A1 ist gleichfalls eine gattungsgemäße Scheibenbremse bekannt, bei der der Haltebügel allerdings aus zwei nach einer Montage miteinander verbindbaren Hälften besteht.

In der EP 0 703 378 A1 ist eine Scheibenbremse geoffenbart, deren Haltebügel mit seinen beiden Enden jeweils in einer im Bremssattel angeordneten Tasche gelagert sind, wobei als Verschwenksicherung Stifte in der jeweiligen Tasche festgesetzt sind, die ein seitliches Auslenken des Haltebügels verhindern.

Die nachveröffentlichte EP 1 767 805 A2 thematisiert die Befestigung eines Haltebügels, indem vorgeschlagen wird, den Haltebügel federbelastet in einer Formschlusshalterung zu halten.

In der DE 103 02 332 B3 schließlich ist die Befestigung eines Endes des Haltebügels in einer Halterung dargestellt, die in einer den Bremssattel verschließenden Verschlussplatte vorgesehen ist.

Der Erfindung liegt die Aufgabe zugrunde, eine Scheibenbremse bzw. einen Haltebügel der gattungsgemäßen Art so weiterzuentwickeln, dass sie kostengünstiger herstellbar sind, eine einfachere und schnellere Montage bzw. Demontage der Bremsbeläge erlauben und die Betriebssicherheit der Scheibenbremse insgesamt verbessert wird.

Diese Aufgabe wird durch eine Scheibenbremse mit den Merkmalen des Anspruchs 1 und durch einen Haltebügel mit den Merkmalen des Anspruchs 9 gelöst. Durch die Erfindung wird zunächst einmal die Funktionssicherheit der Scheibenbremse insgesamt verbessert, da das Befestigungselement unlösbar und damit unverlierbar mit dem Haltebügel im übrigen verbunden ist. Selbst bei dauerhaft stärkeren, betriebsbedingten Erschütterungen des Nutzfahrzeuges ist ein Lösen des Befestigungselementes und damit ein Lösen des Haltebügels aus seiner Befestigungsposition ausgeschlossen. Da es sich bei einer Scheibenbremse um ein sicherheitsrelevantes Bauteil handelt, kommt der Verbesserung der Betriebssicherheit eine besondere Bedeutung zu.

Gemäß der Erfindung ist das Befestigungselement in Form einer Sperrzunge, bevorzugt einstückig mit dem Haltebügel verbunden und so ausgebildet, dass es nach einer Montage durch eine leichte mechanische Bearbeitung in eine sozusagen Sperrposition bringbar ist, in der das Befestigungselement spielfrei an einem Sicherungsteil des Bremssattels anliegt und zwar so, dass eine allseitige Verschiebesicherung des Haltebügels gewährleistet ist.

Die Sperrzunge wird nach einem Aufsetzen des Haltebügels auf das Sicherungsteil des Bremssattels beispielsweise durch Verstemmen so verformt, dass sie an dem Sicherungsteil anliegt.

Durch die einstückige Ausbildung des Befestigungselementes mit dem Haltebügel ist eine besonders einfache und kostengünstige Herstellung möglich, da der Haltebügel als Stanzteil ausgebildet und aus einem Blechstreifen gebildet sein kann.

Das Sicherungsteil des Bremssattels, das auf der der taschenförmigen Aufnahme gegenüberliegenden Seite angeordnet ist und mit dem das Befestigungselement erfindungsgemäß im Sinne einer Halterung korrespondiert, ist im Fall, der Bremssattel ist als Gussteil ausgebildet, gleich mit angeformt. Zur Halterung des Haltebügels weist das Sicherungsteil eine Hinterschneidung auf, in der ein der Sperrzunge gegenüberliegender Steg des Haltebügels einliegt, der eine Durchstecköffnung begrenzt, die in den entsprechenden Endbereich des Haltebügels eingebracht ist.

Für eine einfache Montage des Haltebügels, die ein bequemes Verstemmen der Sperrzunge einschließt, ist das Sicherungsteil vorzugsweise in dem die Bremsenaußenseite bildenden Bereich des Bremssattels, also der Zuspanneinrichtung gegenüberliegend, angeordnet, so dass ein problemfreier Zugriff auf den Haltebügel bzw. den Verbindungsbereich auch zur Demontage gewährleistet ist.

Neben diesen praktischen Vorteilen zeichnet sich die Erfindung dadurch aus, dass die Befestigung des Haltebügels eines sehr geringen Bauraumes bedarf, was den diesbezüglichen allgemeinen Forderungen sehr entgegenkommt.

Darüber hinaus sind zur Montage ebenso wie zur Demontage des Haltebügels keine Spezialwerkzeuge erforderlich. Auch dies trägt zu einer vereinfachten Montage bei.

Die Quasi-Verpressung des Haltebügels am Sicherungsteil verhindert die Entstehung von Klappergeräuschen, da vorhanden Toleranzen durch das Umbiegen, d.h. durch das Verstemmen der Sperrzunge ausgeglichen werden. Dieser sozusagen zwangsweise Toleranzausgleich erlaubt auch hinsichtlich einzuhaltender Toleran-zen eine großzügigere Fertigung, die naturgemäß entsprechende Vorteile mit sich bringt. Weitere vorteilhafte Ausbildungen der Erfindung sind in den Unteransprüchen gekennzeichnet.

Ein Ausfiihrungsbeispiel der Erfindung wird nachfolgend anhand der beigefügten Zeichnungen beschrieben.

Es zeigen:
- Figur 1: einen Teilausschnitt einer erfindungsgemäßen Scheibenbremse mit einem noch nicht fertig montierten Haltebügel in perspektivischer Ansicht

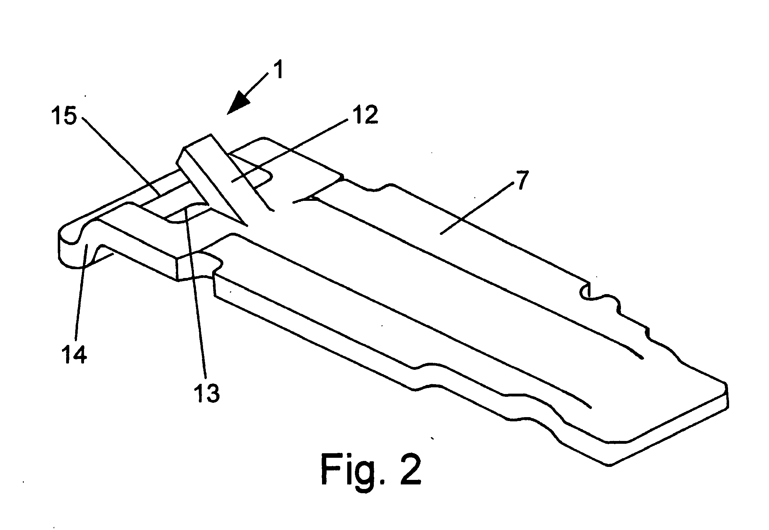

- Figur 2: den Haltebügel, entsprechend der Figur 1, ebenfalls in perspektivi- scher Darstellung
- Figur 3: die Scheibenbremse mit fertig montiertem Haltebügel, ebenfalls als perspektivischer Teilausschnitt
- Figur 4: eine Einzelheit der Scheibenbremse, gesehen in Richtung des Pfeiles IV in Figur 1, in einer geschnittenen Seitenansicht
- Figur 5: die Einzelheit an der Scheibenbremse, gesehen in Richtung des Pfei- les V in Figur 3.

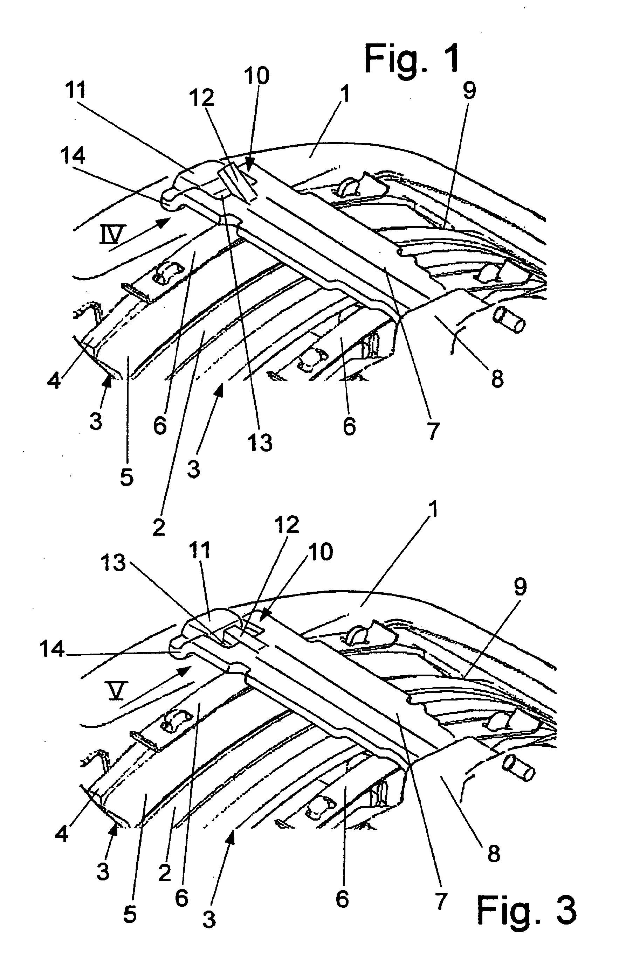

In den Figuren 1 und 3 ist in einem Teilausschnitt eine Scheibenbremse, insbesondere für ein Nutzfahrzeug dargestellt, mit einem eine Bremsscheibe 2 umfassenden Bremssattel 1, in dem Bremsbeläge 3 angeordnet sind, die bei einer Bremsung die Bremsscheibe 2 kontaktieren, wobei jeder Bremsbelag 3 aus einer Belagträgerplatte 4 und einem Reibbelag 5 besteht, der mit der Belagträgerplatte 4 fest verbunden ist.

Zur radialen Verspannung der Bremsbeläge 3 sind Haltefedern 6 vorgesehen, von denen jeweils eine am Außenrand der zugeordneten Belagträgerplatte 4 anliegt.

Ein Haltebügel 7, der sich quer zur Drehrichtung der Scheibenbremse 2 erstreckt und dabei eine Montageöffnung 9 des Bremssattels 1 überspannt, stützt sich an den Haltefedern 6 ab und hält diese nieder.

Zur Festlegung des Haltebügels 7 ist an einer Seite des Bremssattels 1 eine taschenförmige Aufnahme 8 vorgesehen, in die der Haltebügel 7 mit einem Ende eingesteckt ist, während das andere Ende ein Befestigungselement 10 aufweist, das erfindungsgemäß unlösbar mit dem Haltebügel 7 verbunden ist und mit einem Sicherungsteil 11 des Bremssattels 1 im Sinne einer Halterung korrespondiert.

Zur Befestigung des Haltebügels 7 wird dieser endseitig auf das höckerartige Sicherungsteil 11 aufgesteckt, wozu der Haltebügel 7 eine Durchstecköffnung 13 aufweist, die auf der der Sperrzunge 12 gegenüberliegenden Seite durch einen quer verlaufenden Steg 15 begrenzt ist.

Nach diesem Aufstecken erfolgt eine Längsverschiebung des Haltebügels 7 in Richtung der Aufnahme 8 durch die dieser mit seinem einem Ende in die taschenförmige Aufnahme 8 geführt wird und mit seinem anderen Ende, d.h. mit dem dort angeordneten Steg 15 in einen Freischnitt 16 des Sicherungsteiles 11 eingeführt wird, bis der Steg 15 dort zur Anlage kommt. Diese Position ist insbesondere in der Figur 1 zu erkennen.

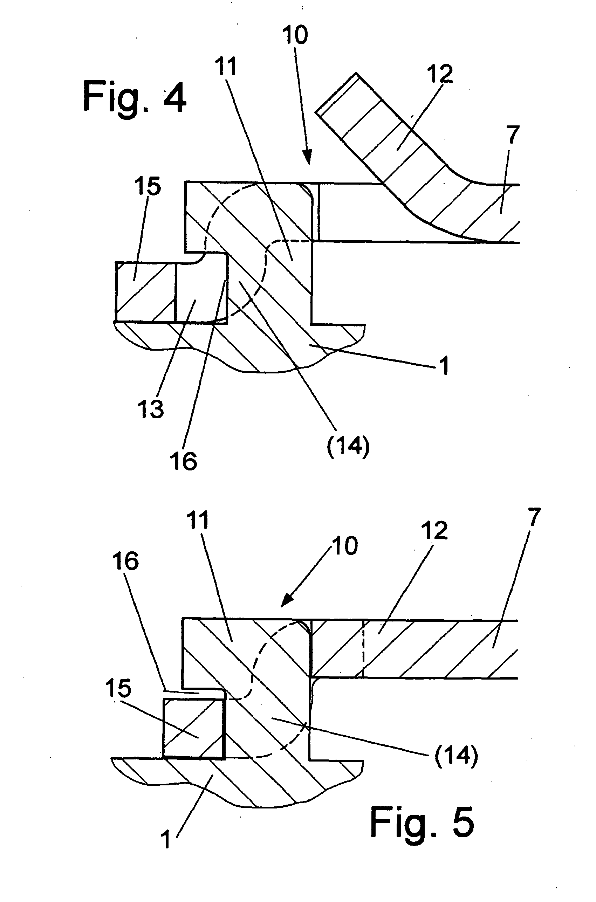

Nach Einnahme dieser Endlage wird die Sperrzunge 12 in Richtung des Sicherungsteiles 11 umgebogen und vorzugsweise verstemmt, wobei die Sperrzunge 12 in die Durchstecköffnung 13 ragt und an einer zugeordneten Außenwandung des Sicherungsteiles 11 unter Kraftschluss anliegt. Dabei bildet der im Freischnitt 16 einliegende Steg 15 ein Widerlager, so dass der Haltebügel in alle Richtung fest eingespannt ist. Diese Position ist besonders deutlich in den Figuren 3 und 5 dargestellt.

Überdies ist zu erkennen, dass der Haltebügel 7 im Bereich des Steges mit einer Kröpfung 14 versehen ist, durch die ein Niveauunterschied zwischen der Sperrzunge 12 in Funktionsstellung (Figuren 3 und 5) und dem Steg 15 besteht, wobei dieser am Bremssattel 1 anliegt, während der Haltebügel 7 im übrigen mit Abstand dazu verläuft, unter Anlage an den Haltefedern 6.

### Bezugszeichenliste

- 1: Bremssattel
- 2: Bremsscheibe
- 3: Bremsbelag
- 4: Belagträgerplatte
- 5: Reibbelag
- 6: Haltefeder
- 7: Haltebügel
- 8: Aufnahme
- 9: Montageöffnung
- 10: Befestigungselement
- 11: Sicherungsteil
- 12: Sperrzunge
- 13: Durchstecköffnung
- 14: Kröpfung
- 15: Steg
- 16: Freischnitt

## Patentansprüche

1. Scheibenbremse, insbesondere für ein Nutzfahrzeug, mit einem Bremssattel (1), der eine Bremsscheibe (2) umfasst, an die bei einer Bremsung beidseitig Bremsbeläge (3) anpressbar sind, sowie einem am Bremssattel (1) befestigten Haltebügel (7), der sich an auf die Außenkanten der Bremsbeläge (3) einwirkende Haltefedern (6) abstützt, wobei der eine Montageöffnung (9) des Bremssattels (1) quer zur Drehrichtung der Bremsscheibe (2) überspannende Haltebügel (7) mit einem Ende formschlüssig am Bremssattel (1) befestigt ist und mit seinem anderen Ende mittels eines Befestigungselementes (10) gehalten ist, das unlösbar mit dem Haltebügel (7) verbunden ist und mit einem Sicherungsteil (11) des Bremssattels (1) im Sinne einer Halterung korrespondiert, **dadurch gekennzeichnet, dass** das Befestigungselement (10) eine Sperrzunge (12) aufweist, die zur Verschiebesicherung des Haltebügels (7) in Längsachsrichtung am Sicherungsteil (11) anliegt.

2. Scheibenbremse nach Anspruch 1, **dadurch gekennzeichnet, dass** die Sperrzunge (12) kraftschlüssig am Sicherungsteil (11) anliegt.

3. Scheibenbremse nach Anspruch 1 oder 2, **dadurch gekennzeichnet, dass** die Sperrzunge (12) einstückig mit dem Haltebügel (7) ausgebildet ist.

4. Scheibenbremse nach einem der vorhergehenden Ansprüche, **dadurch gekennzeichnet, dass** die Sperrzunge (12) und der Haltebügel (7) als einstückiges Stanzteil ausgebildet sind.

5. Scheibenbremse nach einem der vorhergehenden Ansprüche, **dadurch gekennzeichnet, dass** der Haltebügel (7) im Bereich des Befestigungselementes (10) auf das Sicherungsteil (11) aufgesteckt ist, wobei der Haltebügel (7) eine Durchstecköffnung (13) aufweist, die vom Sicherungsteil (11) durchtreten ist.

6. Scheibenbremse nach einem der vorhergehenden Ansprüche, **dadurch gekennzeichnet, dass** die Sperrzunge (12) vor einem Aufstecken des Haltebügels (7) auf das Sicherungsteil (11) gegenüber dem Haltebügel (7) abgespreizt verläuft und nach dem Aufstecken des Haltebügels (7) auf das Sicherungsteil (11) unter Anlage am Sicherungsteil (11) umgebogen ist.

7. Scheibenbremse nach einem der vorhergehenden Ansprüche, **dadurch gekennzeichnet, dass** das Sicherungsteil (11) auf seiner der Bremsscheibe (3) abgewandten Seite einen Hinterschnitt (16) aufweist, in der ein die Durchstecköffnung (13) begrenzender Steg (15) einliegt.

8. Scheibenbremse nach einem der vorhergehenden Ansprüche, **dadurch gekennzeichnet, dass** der Haltebügel (7) durch Anlage des Steges (15) an einer Wandung des Hinterschnitts (16) und durch Anlage der Sperrzunge (7) am Sicherungsteil (11) mit diesem verspannt ist.

9. Scheibenbremse nach einem der vorhergehenden Ansprüche, **dadurch gekennzeichnet, dass** der quer zur Längserstreckung des Haltebügels (7) verlaufende Steg (15) gegenüber dem Haltebügel (7) im übrigen gekröpft ist.

10. Haltebügel zur Halterung von Bremsbelägen (3) einer einen Bremssattel (1) aufweisenden Scheibenbremse, insbesondere eines Nutzfahrzeuges, mit einem an einem Ende verliergesichert angeschlossenen Befestigungselement (10), **dadurch gekennzeichnet, dass** das Befestigungselement (10) eine mit dem Haltebügel (7) ausgebildete, vor dessen Montage aufgespreizte Sperrzunge (12) aufweist.

## Claims

1. A disk brake, in particular for a commercial vehicle, with a brake caliper (1) which comprises a brake disk (2) against which brake linings (3) can be pressed on both sides during braking, and with a holding bracket (7) fastened to the brake caliper (1), which bracket bears against retaining springs (6) which act on the outer edges of the brake linings (3), wherein the holding bracket (7), which bridges an assembly opening (9) of the brake caliper (1) transversely to the direction of rotation of the brake disk (2) is fastened at one end to the brake caliper (1) in a form-fit manner and is retained at its other end by means of a fastening element (10), which is connected non-detachably to the holding bracket (7) and corresponds to a securing part (11) of the brake caliper in the sense of a holding device, **characterized in that** the fastening element (10) has a locking tab (12) which bears against the securing part (11) in order to prevent displacement of the holding bracket (7) in the longitudinal axis direction.

2. The disk brake as claimed in claim 1, **characterized in that** the locking tab (12) bears against the securing part (11) in a force-fit manner.

3. The disk brake as claimed in either of the preceding claims, **characterized in that** the locking tab (12) is formed integrally with the holding bracket (7).

4. The disk brake as claimed in any one of the preceding claims, **characterized in that** the locking tab (12) and the holding bracket (7) are formed as a one-piece punched part.

5. The disk brake as claimed in any one of the preceding claims, **characterized in that** the holding bracket (7) is fitted onto the securing part (11) in the region of the fastening element (10), wherein the holding bracket (7) has a through-opening (13) through which the securing part (11) passes.

6. The disk brake as claimed in any one of the preceding claims, **characterized in that**, prior to a fitting of the holding bracket (7) onto the securing part (11), the locking tab (12) is disposed at an angle with respect to the holding bracket (7), and is bent down into abutment with the securing part (11) after the holding bracket (7) has been fitted onto the securing part (11).

7. The disk brake as claimed in any one of the preceding claims, **characterized in that** the securing part (11) has on its side oriented away from the brake disk (3) an undercut (16) in which a web (15) which delimits the through-opening (13) engages.

8. The disk brake as claimed in any one of the preceding claims, **characterized in that**, through the abutment of the web (15) against a wall of the undercut (16) and through the abutment of the locking tab (7) against the securing part (11), the holding bracket (7) is clamped to the securing part (11).

9. The disk brake as claimed in any one of the preceding claims, **characterized in that** the web (15) disposed transversely to the longitudinal extension of the holding bracket (7) is also cranked with respect to the holding bracket (7).

10. A holding bracket for holding brake linings (3) of a disk brake, in particular of a commercial vehicle, having a brake caliper (1), with a fastening element (10) connected in a non-twistable manner at one end, **characterized in that** the fastening element (10) has a locking tab (12) formed with the holding bracket (7), which tab is spread prior to its assembly.

## Revendications

1. Frein à disque, notamment pour un véhicule utilitaire, comprenant un étrier de frein (1) renfermant un disque de frein (2), auquel se peuvent presser des garnitures de frein (3) des deux côtés au cas de freinage, ainsi qu'un étrier de retenue (7) fixé audit étrier de frein (1), qui s'appuie aux ressort de retenue (6), qui agissent sur les arêtes extérieures desdits garnitures de frein (3), audit étrier de retenue (7), qui enjambe une ouverture de montage (9) dudit étrier de frein (1) en travers relativement au sens de rotation dudit disque de frein (2), étant fixé de manière positive par une extrémité audit étrier de frein (1) et étant retenu par son autre extrémité moyennant un élément de fixation (10), qui est relié audit étrier de retenue (7) de façon non détachable et qui se trouve en correspondance avec un élément d'arrêt (11) dudit étrier de frein (1) au sens d'une attache, **caractérisé en ce que** ledit élément de fixation (10) comprend une lame de blocage (12), qui porte contre ledit élément d'arrêt (11) pour le blocage du déplacement dudit étrier de retenue (7) en sens de l'axe longitudinal.

2. Frein à disque selon la revendication 1, **caractérisé en ce que** ladite lame de blocage (12) porte contre ledit élément d'arrêt (11) par friction.

3. Frein à disque selon la revendication 1 ou 2, **caractérisé en ce que** ladite lame de blocage (12) est formée en une seule pièce ensemble avec ledit étrier de retenue (7).

4. Frein à disque selon une quelconque des revendication précédentes, **caractérisé en ce que** ladite lame de blocage (12) et ledit étrier de retenue (7) sont formés sous forme d'un élément découpé en une seule pièce.

5. Frein à disque selon une quelconque des revendications précédentes, **caractérisé en ce que** ledit étrier de retenue (7) est rapporté sur ledit élément d'arrêt (11) dans la zone dudit élément de fixation (10), audit étrier de retenue (7) présentant une ouverture de passage (13), par laquelle traverse ledit élément d'arrêt.

6. Frein à disque selon une quelconque des revendications précédentes, **caractérisé en ce que** ladite lame de blocage (12) s'écarte dudit étrier de retenue (7) avant le placement dudit étrier de retenue (7) sur ledit élément d'arrêt (11), pendant qu'elle est repliée après le placement dudit étrier de retenue (7) sur ledit élément d'arrêt (11), en portant contre ledit élément d'arrêt (11).

7. Frein à disque selon une quelconque des revendications précédentes, **caractérisé en ce que** ledit élément d'arrêt (11) présente une contre-dépouille (16) de son côté opposé audit disque de frein (3), dans laquelle se pose une entretoise (15), qui limite ladite ouverture de passage (13).

8. Frein à disque selon une quelconque des revendications précédentes, **caractérisé en ce que** ledit étrier de retenue (7) est attelé audit élément de blocage (11) en vertu de ladite entretoise (15) portant contre une paroi de ladite contre-dépouille (16) et de ladite lame d'arrêt (7) portant contre ledit élément de blocage (11).

9. Frein à disque selon une quelconque des revendications précédentes, **caractérisé en ce que** ladite entretoise (15), qui s'étend en travers relativement à l'orientation longitudinale dudit étrier de retenue (7), est contre-coudée, du reste, relativement audit étrier de retenue (7)

10. Etrier de retenue à retenir des garnitures de frein (3) à frein à disque comprenant un étrier de frein (1), notamment pour un véhicule utilitaire, à un élément de fixation raccordé à une extrémité de façon à empêcher la perte, **caractérisé en ce que** ledit élément de fixation (10) présente une lame de blocage (12) formée de façon intégrale avec ledit étrier de retenue (7), qui est étendue avant le montage dudit étrier.
